# EUROPEAN PATENT APPLICATION

(11) **EP 1 596 096 A2**
(43) Date of publication of application: **16.11.2005**
(21) Application number: 05100841.5
(22) Date of filing: 07.02.2005
(51) Int. Cl.: F16G 13/18, E05B 67/00

(54) **Anti-theft chain with protected links**

(30) Priority: 13.05.2004 IT MI20040224 U
(71) Applicant: MAGGI CATENE S.p.A., 23854 Olginate (LECCO) (IT)
(72) Inventor: Maggi, Corrado, 23896 Sirtori (IT)
(74) Representative: Faggioni, Carlo Maria

(57) **Abstract**

An anti-theft chain consisting of a plurality of reciprocally-coupled links is disclosed, wherein each link (1) consists of two free opposite portions and of two other opposite portions intended to couple and cooperate with the adjacent links, and wherein a shell (3) of rigid material is applied onto each link, which shell covers only said free portions; preferably, the shell is coated with a thin protective layer of synthetic material.

## Description

The present invention refers to an improvement of an anti-theft chain, in particular to an anti-theft chain for cycles and motorcycles, which offers increased resistance to theft attempts.

In this technical field, new research is continuously conducted in order to find solutions which may offer increased security at a lower expense, to the simultaneous advantage of versatility and light-weight requirements expressed by customers.

In the past ample use has been made of anti-theft chains having a simple square section, whereas more recently anti-theft chains with purpose-designed sections have been marketed, which have proved more resistant to the action of cutting tools used in case of theft.

In particular, EP 1.243.813 in the name of the same Applicant shows an anti-theft chain having a pentagonal section, which has proved particularly effective.

However, particularly strict tests have highlighted that even these types of anti-theft chain still have room for improvement.

Specifically, whenever handling features of this chain (typically for use on cycles and motorcycles) is to be privileged, the inevitable lighter-weight links - for achieving reduced sections and hence chain flexibility and lightness - cause a reduction of the mechanical and resistance features. On the other hand, the even increase of link thickness, for the purpose instead of enhancing the resistance thereof, negatively affects especially flexibility and manoeuvrability of these chains.

It is an object of the present invention to provide a versatile and manoeuvrable anti-theft chain which, however, has improved features of resistance to theft attempts. It is a further object of the present invention to offer such a chain which also has technical peculiarities allowing an improved appearance thereof.

These results are achieved by a chain having the features mentioned in the attached claims.

The invention will now be described with reference to the annexed drawings, wherein:

fig. 1A is a plan view of a link of the chain according to the invention;

fig. 1B is a cross-section view according to line B-B of fig. 1A;

fig. 1C is an enlarged view of the detail enclosed in circle A of fig. 1B;

fig. 2A is a perspective view of a portion of an anti-theft chain according to the invention;

fig. 2B is a plan view of a portion of chain according to the invention; and

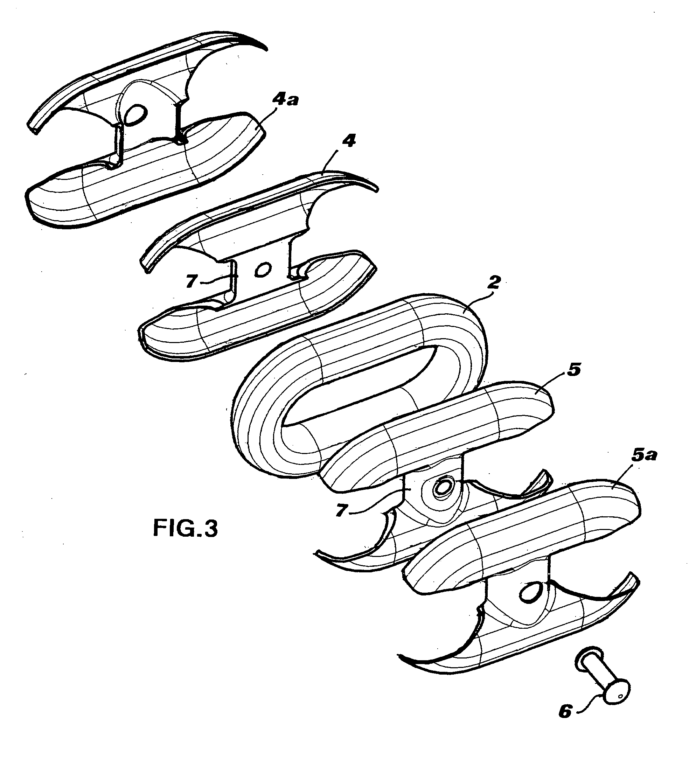

fig. 3 is an exploded prospective view of a link and relative shell according to the invention.

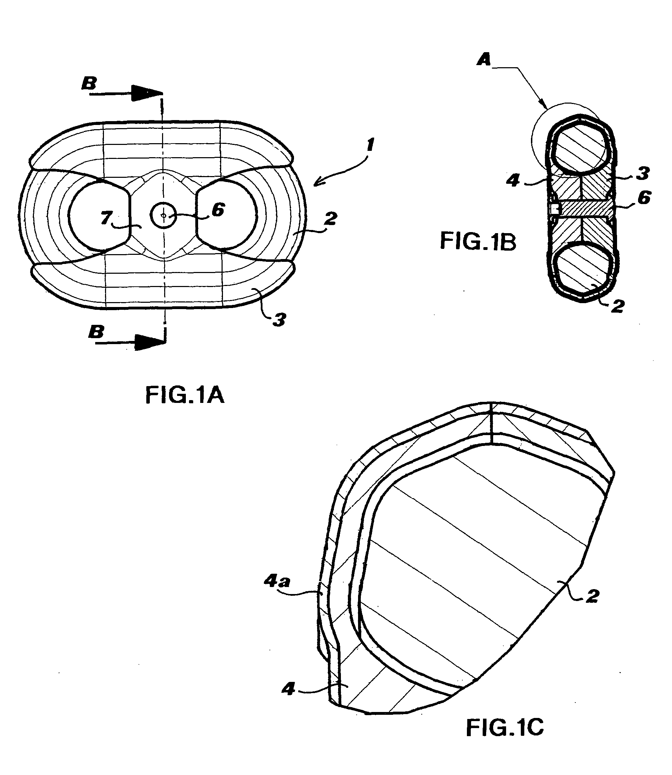

Fig. 1A shows a typical link 1 of an anti-theft chain, for example a link consisting of an oval ring 2 having a section as described in EP 1.243.813.

According to the invention, the ring 2 is covered by a shell 3 of a rigid protective material which, however, overlaps only the free portion of the ring 2 and not the portion intended to couple and cooperate with the adjacent links in a complete chain.

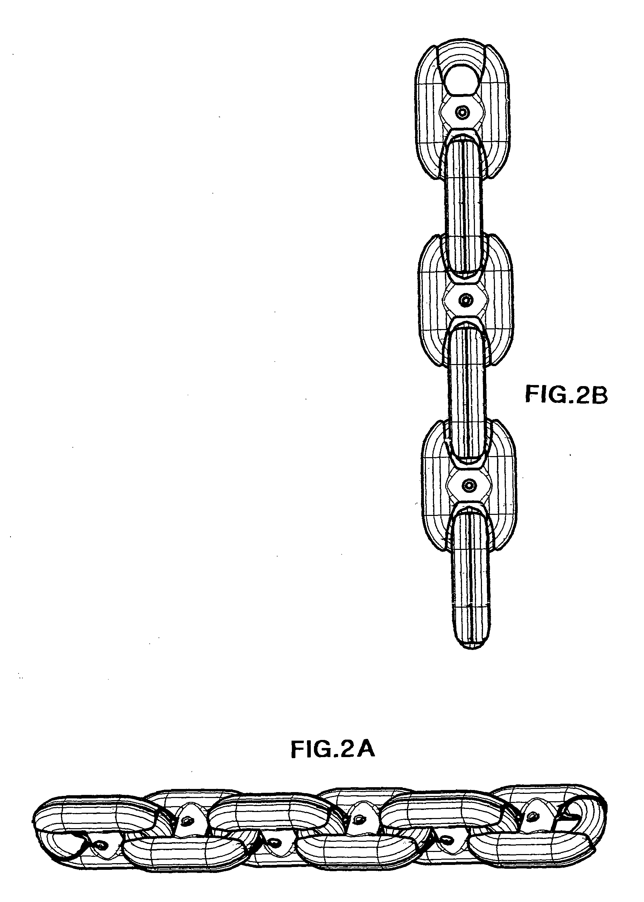

Due to this original design, shell 3 covers ring 2 along the longer sides thereof, which are the ones most exposed to the action of a cutting tool, thereby contributing to raise the resistance thereof to tamper. Conversely, link 1 inserted in the anti-theft chain (figs. 2A and 2B) appears substantially protected along the two shorter and bow-shaped sides, for the reciprocal engagement with the other links which make up the chain: hence, advantageously, on this portion the ring 2 is devoid of shell 3, which keeps the engagement section to a limited size and hence guarantees maintenance of a sufficient chain manoeuvrability and flexibility.

Shell 3 can have an overall thickness of 1-2.5 mm and the rigid material can be a metallic one, for example C45 steel capable of being hardened and tempered, or a plastic material (for example PVC), or a metallic material coated with a layer of plastic material.

Shell 3 advantageously consists of two half-shells (4, 5), having an approximate H-shape, obtained, for example, by cold-molding or hot-shaping. Said half-shells are kept in reciprocal engagement by a rivet 6, arranged at the centre of a central transversal arm 7.

As an alternative to rivet 6, other fastening means can be used, for example a welding spot.

Shell 3 can be further coated with different synthetic materials, for example nylon, teflon, polyurethane or PVC, to meet any appearance requirements or to provide increased protection to the shell itself, and hence to link 1. In fact, the use of plastic material coatings, in addition to providing the required resistance, allows to provide the anti-theft chain in a specific desired colour. Consequently, it is no longer necessary to provide for further tubular plastic coating sheaths which, as known, often have poor appearance and undesirably retain humidity inside, and are mostly ineffective for the protection of the anti-theft chain from atmospheric agents.

The plastic material coating 4a and 5a, for example 0.5 mm thick, can be applied directly onto each half-shell, resulting into a single piece, or it can be obtained as a separate element (for example a molded one) and then applied to the half-shells and fixed there with the same fastening means 6 to ring 2.

It must be stressed that the presence of the shell according to the invention remarkably simplifies the arrangement or application of plastic or synthetic coatings. In fact the application of protective or aesthetic coatings of these materials directly onto the finished chain would imply various inconveniences of a technological nature (for example resulting in the links joining up with the plastic material and with each other), whereas the application onto the two half-shells - which serve as an application carrier to the links - can be accomplished much more effectively.

It can be guessed that the technological process to obtain this original chain is not complicated beyond measure: shell 3 is in fact attached to link 1 through easy riveting or bonding. Moreover, the manufacturing process of the basic chain can be kept unchanged and, only for the desired quantities, it can be made to be followed by a step during which the protective shells are applied.

As can be seen, the objects set forth in the preliminary remarks are perfectly achieved. In fact, it is evident that the anti-theft chain according to the invention allows to obtain a versatile anti-theft device which is relatively light and highly resistant to theft attempts. Moreover, the protective shell can be an effective carrier for the application of coatings of a different nature, for example plastic ones, to the chain links.

It is understood, however, that the scope of the invention described above is not to be considered limited to the particular embodiment illustrated, but it extends to any other technically equivalent construction variant.

## Claims

1. Anti-theft chain consisting of a plurality of reciprocally coupled links, wherein each link consists of two free opposite portions and of two other opposite portions intended to couple and cooperate with the adjacent links, **characterised in that** a shell (3) of a rigid material is applied onto each link, which shell covers only said free portions.

2. Anti-theft chain as in claim 1), **characterised in that** said shell (3) consists of two half-shells (4, 5), each approximately H-shaped, coupled to the two opposite sides of each link and joined by fastening means.

3. Anti-theft chains as in claim 2), wherein said fastening means are arranged on transversal portion (7) of said H shape.

4. Anti-theft chain as in claim 2) or 3), wherein said fastening means is a rivet (6).

5. Anti-theft chain as in any one of claims 1) to 4), wherein said rigid material of the shell (3) is a metallic material.

6. Anti-theft chain as in claim 4), **characterised in that** said metallic material is a steel capable of being hardened and tempered.

7. Anti-theft chain as in any one of claims 1) to 4), wherein said rigid material which makes up the shell (3) is PVC.

8. Anti-theft chain as in any one of the previous claims, wherein the material of said shell (3) has a thickness not above 1.5 mm.

9. Anti-theft chain as in any one of the previous claims, wherein said rigid material of the half-shells is coated with a thin protective layer.

10. Anti-theft chain as in claim 9), wherein said thin protective layer is a plastic synthetic material.
